# EUROPÄISCHE PATENTSCHRIFT

(11) **EP 4 306 909 B1**
(45) Veröffentlichungstag und Bekanntmachung des Hinweises auf die Patenterteilung: **11.09.2024**
(21) Anmeldenummer: 23179625.1
(22) Anmeldetag: 15.06.2023
(51) Int. Cl.: G01D 5/48

(54) **VORRICHTUNG ZUR ERFASSUNG EINER POSITION UND POSITIONSERFASSUNGSSYSTEM**
POSITION DETECTING DEVICE AND POSITION DETECTING SYSTEM
DISPOSITIF DE DÉTECTION DE POSITION ET SYSTÈME DE DÉTECTION DE POSITION

(30) Priorität: 13.07.2022 DE 102022117489
(43) Veröffentlichungstag der Anmeldung: 17.01.2024
(73) Patentinhaber: SICK AG, 79183 Waldkirch (DE)
(72) Erfinder: HUMMEL, Stefan, 78050 VS-Villingen (DE); GINTER, Marcel, 78739 Hardt (DE)
(74) Vertreter: Manitz Finsterwald Patent- und Rechtsanwaltspartnerschaft mbB

(56) Entgegenhaltungen:
- DE-A1- 10 108 925
- DE-A1- 102006 041 827

## Beschreibung

Die Erfindung betrifft eine Vorrichtung zur Erfassung einer Position und ein Positionserfassungssystem .

Vorrichtungen zur Erfassung einer Position sind prinzipiell bekannt. Um diese jedoch gemeinsam mit Profilelementen einzusetzen, müssen diese bisher mit speziellen Halteklammern befestigt werden. Auch muss für ein Positionserfassungselement ein gesonderter Raum oder Platz an oder in der Nähe des Profilelements vorgehalten werden, wodurch diese aufbauend an dem Profilelement befestigt werden müssen. Hierdurch ergibt sich ein Risiko der Beschädigung.

Aus der DE 101 08 925 A1 ist beispielsweise eine Magneto-striktive Wegmeß-Vorrichtung bekannt. Die DE 10 2006 041 827 A1 offenbart ein Verfahren zur Bestimmung eines Zeitintervalls.

Es ist eine Aufgabe der vorliegenden Erfindung, eine verbesserte Vorrichtung zur Erfassung einer Position und ein verbessertes Positionserfassungssystem anzugeben.

Diese Aufgabe wird gelöst durch die Gegenstände der unabhängigen Ansprüche. Weiterbildungen sind in den abhängigen Ansprüchen definiert.

Es wird zunächst eine Ausführungsform einer Vorrichtung zur Erfassung einer Position beschrieben, die nicht Teil der Erfindung ist. Dennoch gelten die für die hier beschriebene Vorrichtung erläuterten Merkmale gleichermaßen für die im weiteren Verlauf beschriebene erfindungsgemäße Vorrichtung zur Erfassung einer Position, soweit diese anwendbar sind.

Die nicht beanspruchte Vorrichtung umfasst ein Profilelement, das insbesondere einen im Wesentlichen quadratischen Querschnitt und einen länglichen Körper aufweist, wobei das Profilelement zumindest eine Aussparung und einen zentralen Hohlraum aufweist, der sich entlang der Länge des Körpers erstreckt und ein Positionserfassungselement, umfassend eine Messsonde, ein erstes bewegliches Positionierungselement und eine Auswertungseinheit, wobei die Auswertungseinheit ausgebildet ist, eine Position des ersten Positionierungselements relativ zu der Messsonde zu erfassen und wobei die Messsonde in dem zentralen Hohlraum des Profilelements angeordnet ist.

Das Profilelement weist eine im Wesentlichen gleich große Höhe und Breite auf und erstreckt sich entlang einer Länge. Dabei kann das Profilelement im Querschnitt abschnittsweise abgerundete Ecken aufweisen.

Das Profilelement umfasst zumindest eine Aussparung, die sich entlang der Länge des Körpers erstreckt. Das Profilelement umfasst auch einen zentralen Hohlraum, der auch als Kernloch bezeichnet werden kann. Insbesondere ist der zentrale Hohlraum sowohl in Bezug auf die Breite des Querschnitts als auch in Bezug auf die Länge des Querschnitts zentriert, also sowohl in horizontaler als auch vertikaler Richtung zentriert. Weiter insbesondere fällt ein Mittelpunkt des zentralen Hohlraums im Querschnitt mit einem Mittelpunkt des Querschnitts des Profilelements zusammen.

Das Profilelement kann beispielsweise aus Edelstahl gefertigt sein. Alternativ kann das Profilelement aus Aluminium, insbesondere eloxiertem Aluminium gefertigt sein. Insbesondere handelt es sich bei dem Profilelement um ein Profilelement der Serie 8 von der Firma item.

Die Vorrichtung umfasst auch ein Positionserfassungselement mit einer Messsonde, einem ersten beweglichen Positionierungselement und einer Auswertungseinheit. Die Auswertungseinheit ist dabei ausgebildet, eine Position des ersten Positionierungselements relativ zu der Messsonde zu erfassen. Das Positionserfassungselement ist auch ausgebildet, insbesondere auf Basis der erfassten Position und einer bekannten Ausgangsposition, eine Strecke, einen Abstand und/oder eine Wegstrecke zu erfassen.

Dabei ist die Messsonde in dem zentralen Hohlraum, insbesondere entlang der Länge des Körpers angeordnet und erstreckt sich darin. Insbesondere fällt ein Mittelpunkt der Messsonde im Querschnitt mit dem Mittelpunkt des zentralen Hohlraums im Querschnitt zusammen.

Hierdurch wird auf platzsparende Weise eine Vorrichtung zur Positionserfassung bereitgestellt. Darüber hinaus wird durch die erfindungsgemäße Lösung ein Vorrichtung zur Positionserfassung ermöglicht, die in weit verbreiteten Profilelementen einfach montiert und ausgetauscht werden kann.

Erfindungsgemäß wird eine Vorrichtung zur Erfassung einer Position angegeben, umfassend ein Profilelement, das einen im Wesentlichen rechteckigen Querschnitt und einen länglichen Körper aufweist, wobei das Profilelement eine erste Aussparung, eine zweite Aussparung, einen ersten zentralen Hohlraum und einen zweiten zentralen Hohlraum aufweist, die sich entlang der Länge des Körpers erstrecken und ein Positionserfassungselement, umfassend eine erste Messsonde, eine zweite Messsonde, ein erstes bewegliches Positionierungselement und ein zweites bewegliches Positionierungselement sowie eine Auswertungseinheit, wobei die Auswertungseinheit ausgebildet ist, eine Position des ersten Positionierungselements relativ zu der ersten Messsonde zu erfassen und eine Position des zweiten Positionierungselements relativ zu der zweiten Messsonde zu erfassen und wobei die erste Messsonde in dem ersten zentralen Hohlraum des Profilelements angeordnet ist und die zweite Messsonde in dem zweiten zentralen Hohlraum des Profilelements angeordnet ist.

Alternativ zur zuvor beschriebenen Ausführungsform weist diese erfindungsgemäße Ausführung des Profilelements zwei zentrale Hohlräume auf, in denen jeweils eine Messsonde angeordnet ist, und zumindest zwei Aussparungen. Darüber hinaus weist das Positionserfassungselement zwei Positionierungselemente auf und die Positionserfassungsvorrichtung ist ausgebildet, die Position von beiden Positionierungselementen relativ zu der jeweiligen Messsonde zu erfassen und auszuwerten.

Darüber hinaus ist abweichend der Querschnitt rechteckig, wobei insbesondere eine Breite des Querschnitts breiter, insbesondere doppelt so breit ist wie eine Höhe des Querschnitts.

Dabei sind ist der erste Hohlraum und der zweite Hohlraum im Querschnitt des Profilelements entlang einer Höhe, also vertikal zentriert und entlang einer Breite, also horizontal beabstandet. Insbesondere sind der erste Hohlraum und der zweite Hohlraum um eine halbe Breite des Querschnitts voneinander entlang der Breite beabstandet.

Diese erfindungsgemäße Lösung eignet sich besonders für sicherheitsrelevante Positionserfassungen. Insbesondere wird durch die zweite Messsonde und das zweite Positionierungselement eine Redundanz und/oder eine Fehlerkorrektur bereitgestellt.

Gemäß einer Ausführungsform ist das erste bewegliche Positionierungselement in der zumindest einen ersten Aussparung angeordnet ist und entlang dieser beweglich und/oder das zweite bewegliche Positionierungselement in der zumindest einen zweiten Aussparung angeordnet ist und entlang dieser beweglich.

Dabei kann die zumindest eine erste Aussparung und/oder die zumindest eine zweite Aussparung einen Vorsprung aufweisen und das erste und/oder zweite bewegliche Positionierungselement ein Befestigungselement aufweisen, das mit dem ersten Vorsprung derart eingreift, dass es entlang der Länge des Körpers beweglich innerhalb der Aussparung befestigt ist.

Die zumindest eine erste Aussparung und/oder die zumindest eine zweite Aussparung kann abschnittsweise einen viertelkreisförmigen Querschnitt, insbesondere einen pilzförmigen Querschnitt aufweisen.

Gemäß einer Ausführungsform umfasst das erste bewegliche Positionierungselement und/oder das zweite bewegliche Positionierungselement ein Magnetelement, wobei das Positionserfassungselement ausgebildet ist, eine Position des Positionierungselements basierend auf dem magnetostriktiven Prinzip zu erfassen.

Gemäß einer Ausführungsform weist das Profilelement vier, insbesondere genau vier Aussparungen auf, die symmetrisch um den zentralen Hohlraum herum in vier Seiten des quadratischen oder rechteckigen Querschnitts angeordnet sind.

In einer alternativen Ausführungsform weist das Profilelement sechs, insbesondere genau sechs Aussparungen auf, die symmetrisch um den zentralen Hohlraum herum in vier Seiten des rechteckigen Querschnitts angeordnet sind.

Dadurch, dass mehrere Aussparungen in dem Profilelement vorgesehen sind, können eine oder mehrere von den Aussparungen für die Anordnung des Positionierungselements vorgesehen sein und eine oder mehrere weitere von den Aussparungen für die Befestigung des Profilelements an anderen Profilelementen oder Gegenständen.

In einer weiteren alternativen Ausführungsform weist das Profilelement genau eine Aussparung auf, in der ausschließlich das erste bewegliche Positionierungselement angeordnet ist.

In einer weiteren alternativen Ausführungsform weist das Profilelement genau zwei Aussparungen auf, wobei das erste bewegliche Positionierungselement in der ersten Aussparung angeordnet ist und das zweite bewegliche Positionierungselement in der zweiten Aussparung angeordnet ist.

Hierdurch ergibt sich eine besonders schmutz- und reinigungsarme Vorrichtung.

Die eingangs genannte Aufgabe wird auch gelöst durch ein Positionserfassungssystem, umfassend eine Ausführungsform einer zuvor genannten Vorrichtung zur Erfassung einer Position und ein zweites Profilelement, das mit dem Positionserfassungselement verbunden ist. Hierdurch kann sich ein Baukastensystem ergeben, wobei sich (unterschiedliche) Profilelemente mit verschiedenen Längsprofilgehäusen kombinieren lassen.

Bezüglich der Ausführungsformen des Positionserfassungssystems und deren Vorteilen wird auf die oben beschriebenen Ausführungsformen der Vorrichtung zur Erfassung einer Position und deren Vorteile verwiesen.

Die hierin beschriebenen Ausführungsformen der Vorrichtung zur Erfassung einer Position sowie des Positionserfassungssystems eignen sich insbesondere zum flexiblen Einsatz in jeder Anlage oder an jedem Arbeitsplatz für lineare Positionier- oder Messaufgaben. Beispielsweise kann durch die erfindungsgemäßen Ausführungsformen ein Anschlages einer Kappsäge bereitgestellt werden.

Alternativ oder zusätzlich kann eine Längenmessung von Teilen oder Komponenten bereitgestellt werden. Alternativ oder zusätzlich kann eine Positionskontrolle von Schraub-, Niet-, Klebesystemen auf einem Arbeitsplatz bereitgestellt werden.

Alternativ oder zusätzlich können die Ausführungsformen zur Positionierung von Schutzhauben und Türen eingesetzt werden. Alternativ oder zusätzlich können die Ausführungsformen für Lineareinheiten, Positioniersysteme und Kreuztische für Roboter, Fräsmaschinen, Positionier- oder Dosieranlagen eingesetzt werden. Alternativ oder zusätzlich können die Ausführungsformen für Qualitätsprozesse, z.B. Kontrolle von Leitungslängen vor der Montage zur Qualitätsnachverfolgung und Traceability eingesetzt werden. Alternativ oder zusätzlich können die Ausführungsformen in Hebebühnen, Waschanlagen und/oder Spritzgussmaschinen eingesetzt werden.

Ausführungsformen einer Vorrichtung zur Erfassung einer Position sowie eines Positionserfassungssystems werden nun im Zusammenhang mit den folgenden Figuren näher beschrieben. Es zeigen:
- Fig. 1: einen Querschnitt eines Profilelements einer nicht beanspruchten Ausführungsform einer Vorrichtung zur Erfassung einer Position;
- Fig. 2: einen Querschnitt eines Profilelements einer erfindungsgemäßen Vorrichtung zur Erfassung einer Position;
- Fig. 3: eine perspektivische Ansicht des Profilelements aus Fig. 1;
- Fig. 4: eine perspektivische Ansicht des Profilelements aus Fig. 3 mit einem Flanschelement;
- Fig. 5: eine perspektivische Rückansicht des Flanschelements aus Fig. 4;
- Fig. 6: eine perspektivische Ansicht einer Vorrichtung zur Erfassung einer Position mit einem Profilelement aus Fig. 4
- Fig. 7: eine perspektivische Ansicht der Vorrichtung zur Erfassung einer Position aus Fig. 6 mit einem Gehäuseelement
- Fig. 8: eine perspektivische Detailansicht des Profilelements aus Fig. 1 mit einem Positionierungselement;
- Fig. 9: eine perspektivische Ansicht der Vorrichtung zur Erfassung einer Position aus Fig. 7;
- Fig. 10: eine perspektivische Ansicht der Vorrichtung zur Erfassung einer Position aus Fig. 7 mit einem Adapterelement;
- Fig. 11: eine perspektivische Ansicht eines Positionserfassungssystems mit einer Vorrichtung zur Erfassung einer Position aus Fig. 9; und
- Fig. 12: eine Schnittansicht in Draufsicht des Positionserfassungssystems aus Fig. 11.

Dabei bezeichnen gleiche oder ähnliche Bezugszeichen gleiche oder ähnliche Merkmale.

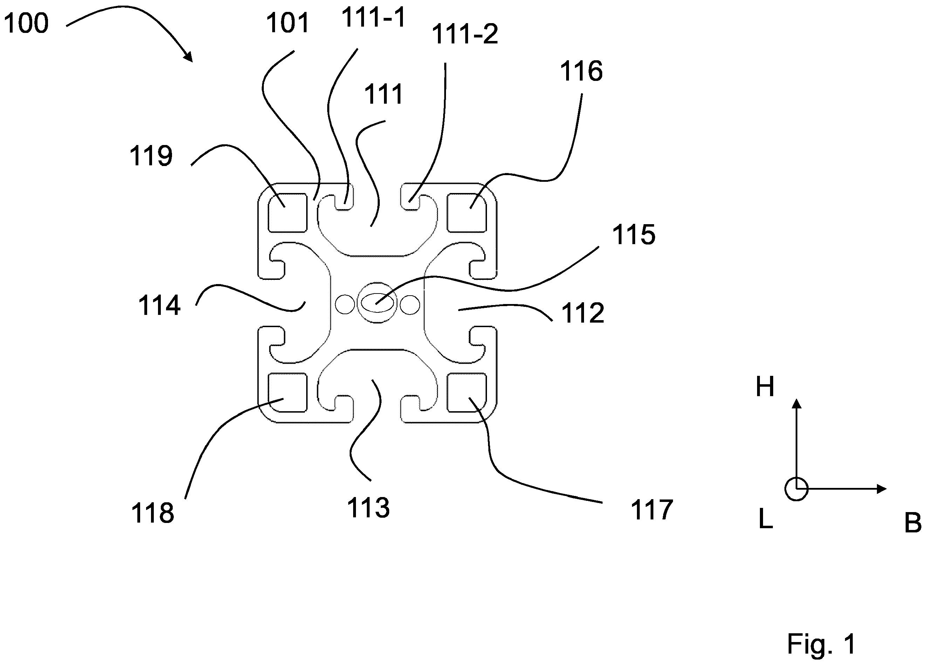

Fig. 1 zeigt ein Profilelement 100 einer nicht beanspruchten Ausführungsform einer Vorrichtung zur Erfassung einer Position im Querschnitt. Das Profilelement umfasst einen länglichen Körper 101 mit einr im Wesentlichen gleiche Höhe H und Breite B auf, wodurch der Querschnitt im Wesentlichen quadratisch ausgebildet ist. Die Länge L des Profilelements erstreckt sich dabei in die Zeichnungsebene hinein. Dabei ist das Profilelement 100 vorliegend beispielhaft mit abgerundeten Ecken gezeigt.

Das Profilelement 100 umfasst eine erste Aussparung 111, eine zweite Aussparung 112, eine dritte Aussparung 113 und eine vierte Aussparung 114, die auf jeweiligen Seiten des Profilelements 100 angeordnet sind.

Das Profilelement 100 umfasst auch einen zentralen Hohlraum 115. Der zentrale Hohlraum 115 ist dabei rund, insbesondere kreisrund ausgebildet und mittig im quadratischen Querschnitt angeordnet, sodass ein Mittelpunkt des zentralen Hohlraums 115 mit einem Mittelpunkt des quadratischen Querschnitts zusammenfällt.

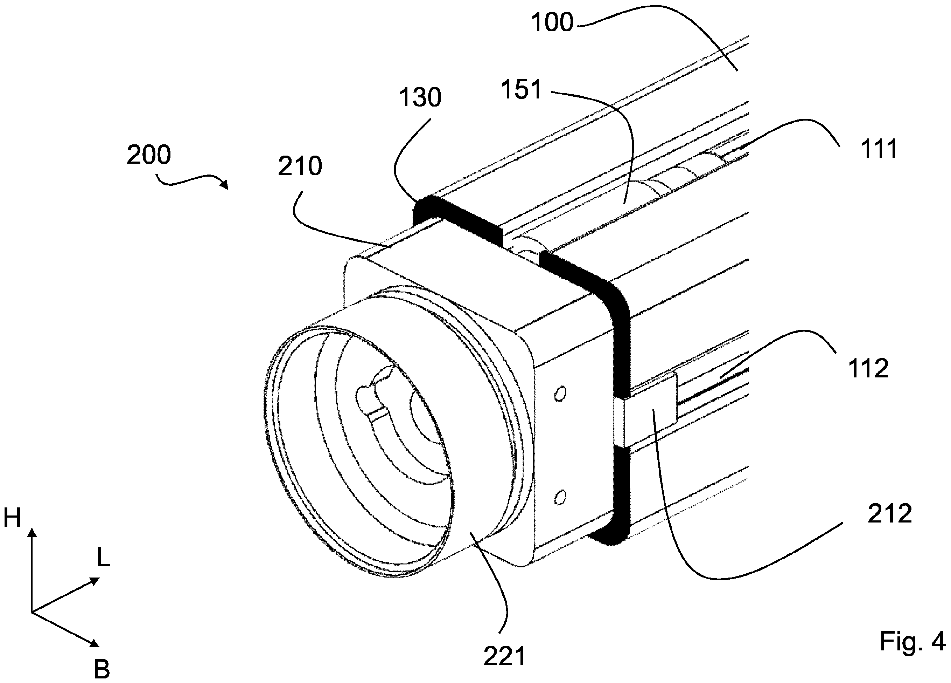

Der Hohlraum 115 ist dabei ausgebildet, eine hier nicht gezeigte Messsonde eines im Zusammenhang mit den Fig. 4ff beschriebenen Positionserfassungselements aufzunehmen und darin unterzubringen.

Die vier Aussparungen 111-114 sind dabei symmetrisch um den Mittelpunkt des zentralen Hohlraums 115 angeordnet, insbesondere sowohl punkt- als auch achsensymmetrisch. Die vier Aussparungen 111-114 haben alle einen gleichförmigen Querschnitt und erstrecken sich zumindest abschnittsweise, insbesondere entlang der gesamten Länge L des Profilelements 100. Der Querschnitt der vier Aussparungen 111-114 ist hier beispielhaft als pilz- oder glühbirnenförmig gezeigt. Insbesondere besteht der Querschnitt der vier Aussparungen abschnittsweise aus zwei Viertelkreisen, die über einen gerade Abschnitt miteinander verbunden werden und an die sich jeweils ein Vorsprung anschließt. Alternativ können die Aussparungen 111-114 auch halbkreis- oder dreiviertelkreisförmig, oder auch eckig, insbesondere rechteckig ausgebildet sein.

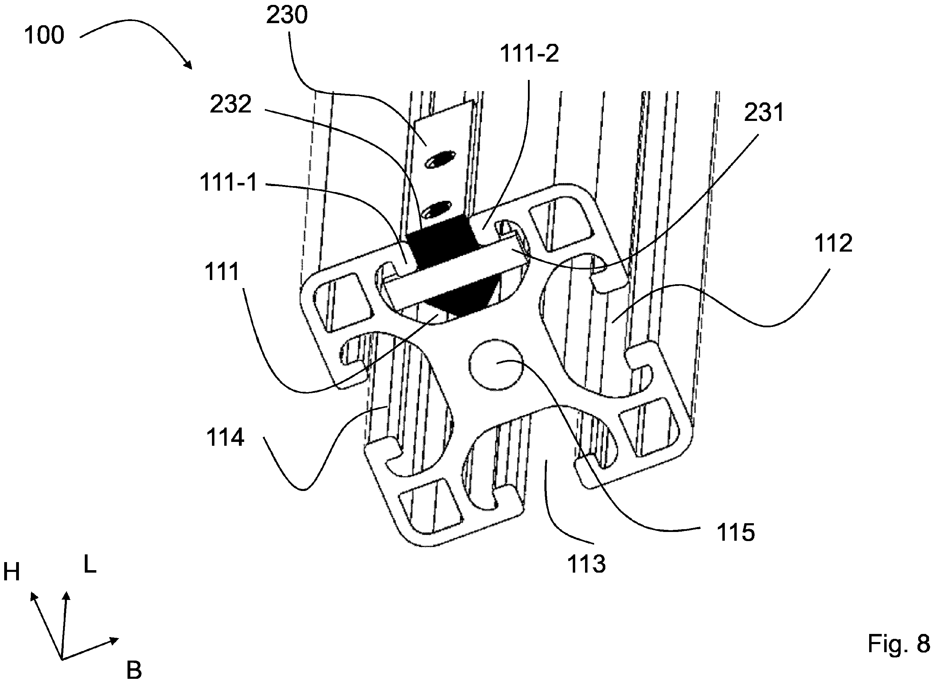

Die Aussparungen 111-114 dienen zum einen der Befestigung des Profilelements 100 an Geräten und/oder Anlagen, an denen eine Position gemessen werden soll. Darüber hinaus dienen die Aussparungen 111-114 dazu, ein oder mehrere Positionierungselemente unterzubringen und darin zu befestigen, wie dies im Zusammenhang mit Fig. 8 noch näher erläutert werden wird. Dazu weisen die Aussparungen die zuvor beschriebenen Vorsprünge oder Auskragungen auf, die mit geeigneten korrespondierenden Befestigungselementen eine Befestigung des Profilelements 100 ermöglichen. Beispielhaft sind in dieser Fig. 1 ein erster Vorsprung 111-1 und ein zweiter Vorsprung 111-2 mit Bezugszeichen versehen.

Das Profilelement 100 weist zusätzlich zu dem zentralen Hohlraum auch einen ersten Hohlraum 116, einen zweiten Hohlraum 117, einen dritten Hohlraum 118 und einen vierten Hohlraum 119 auf, die ebenfalls symmetrisch um den Mittelpunkt des Querschnitts des Profilelements 100 angeordnet sind. Diese Hohlräume dienen der Gewichtsersparnis des Profilelements 100.

Bei dem in Fig. 1 gezeigten Profilelement 100 handelt es sich insbesondere um ein Profilelement 8 der Firma item mit einer Breite B von 40 mm, einer Höhe H von 40 mm und einer Länge L von 6000 mm, wobei die Länge auf den Anwendungsbedarf gekürzt sein kann.

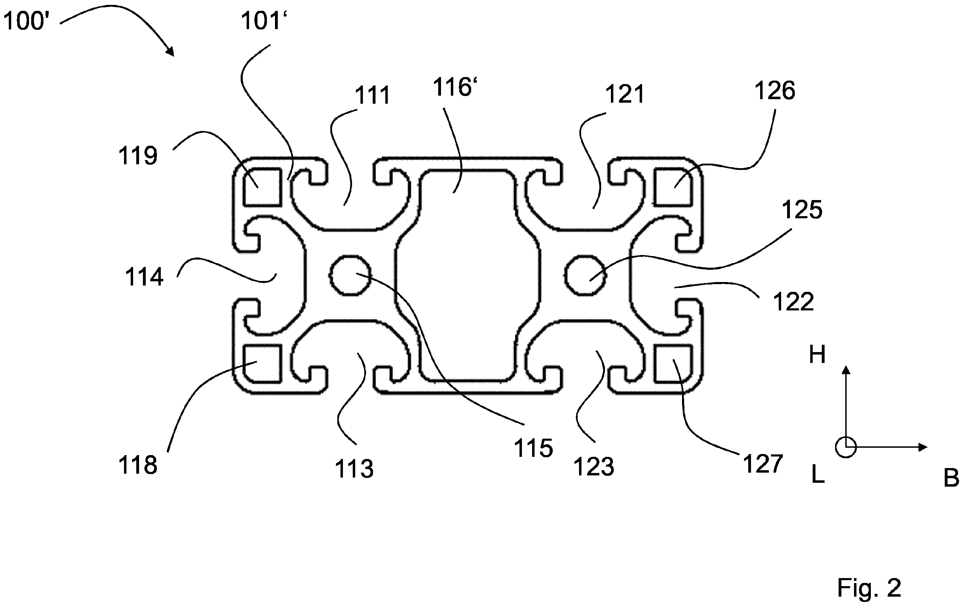

Fig. 2 zeigt eine erfindungsgemäße Ausführungsform eines Profilelements 100' einer Vorrichtung zur Erfassung einer Position im Querschnitt. Dabei weist das Profilelement 100' abweichend zum in Fig. 1 gezeigten Beispiel einen im Wesentlichen rechteckigen Querschnitt auf, wobei die Breite B ca. dem doppeltem der Höhe H des Profilelements 100' entspricht.

Das Profilelement 100' weist auch abweichend zwei zentrale Hohlräume auf, einen ersten zentralen Hohlraum 115 und einen zweiten zentralen Hohlraum 125. Dabei sind die zentralen Hohlräume 115, 125 entlang einer Höhe H des Profilelements 100' zentral angeordnet, jedoch entlang einer Breite B des Profilelements voneinander beabstandet und zu einem Mittelpunkt versetzt angeordnet.

Insbesondere sind die zentralen Hohlräume 115, 125 um eine halbe Breite B des Profilelements 100` voneinander beabstandet. Dabei ist das Profilelement 100' achsensymmetrisch zu einer zentralen vertikalen Achse entlang der Höhe H ausgebildet. Die zentralen Hohlräume 115, 125 sind dazu ausgebildet, eine oder mehrere hier nicht gezeigte Messsonden eines im Zusammenhang mit den Fig. 4ff beschriebenen Positionserfassungselements aufzunehmen und darin unterzubringen. Insbesondere ist der erste zentrale Hohlraum 115 dazu ausgebildet eine erste Messsonde darin unterzubringen und der zweite zentrale Hohlraum 125 ist dazu ausgebildet, eine zweite Messsonde darin unterzubringen.

Das Profilelement 100' weist auch abweichend in der linken Profilseite lediglich drei Aussparungen 111, 113, 114 und zwei Hohlräume 118 und 119 auf, die den in Fig. 1 gezeigten entsprechen. Zusätzlich weist das Profilelement 100' eine fünfte Aussparung 121, eine sechste Aussparung 122 und eine siebte Aussparung 123 auf, die den Aussparungen 111, 113 und 114 entsprechen. Ebenso weist das Profilelement 100' einen fünften Hohlraum 126 und einen sechsten Hohlraum 127, die den Hohlräumen 118 und 119 entsprechen.

Zusätzlich weist das Profilelement 100' einen gemeinsamen Hohlraum 116` auf, der sich über die zentrale vertikale Achse entlang der Höhe H erstreckt. Auch hier dienen die Hohlräume der Gewichtsersparnis und die Aussparungen der Befestigung des Profilelements 100' sowie dazu ein oder mehrere Positionierungselemente unterzubringen und darin zu befestigen. Insbesondere kann ein erstes Positionierungselement in einer der Aussparungen 111, 113 und 114, insbesondere der Aussparung 111, und ein zweites Positionierungselement in einer der Aussparungen 121, 122 und 123, insbesondere der Aussparung 121 angeordnet sein. Insbesondere können jeweils ein Positionierungselement in einer jeweils korrespondieren Aussparung angeordnet sein, beispielsweise 111 und 121, 122 und 114 und/oder 113 und 123.

Bei dem in Fig. 2 gezeigten Profilelement 100' handelt es sich insbesondere um ein Profilelement 8 der Firma item mit einer Breite B von 80 mm, einer Höhe H von 40 mm und einer Länge L von 6000 mm, wobei die Länge L auf den Anwendungsbedarf gekürzt sein kann.

In den folgenden Figuren ist lediglich ein quadratisches Profilelement 100 aus Fig. 1 gezeigt. Es versteht sich jedoch, dass die beschriebenen Ausführungsformen sich alternativ oder zusätzlich auf ein rechteckiges Profilelement 100' aus Fig. 2 beziehen können.

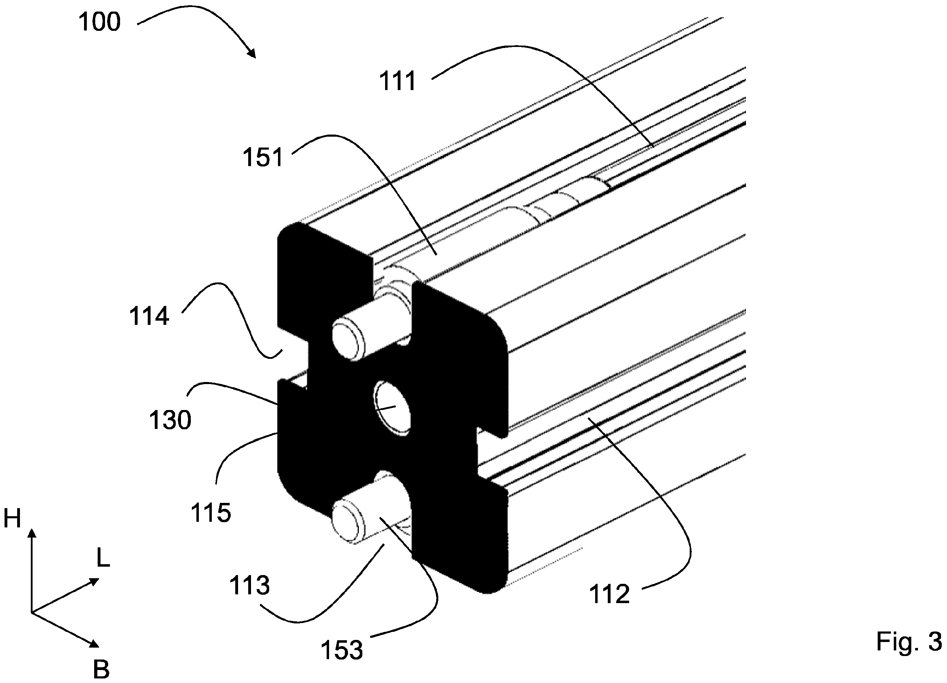

Fig. 3 zeigt eine perspektivische Ansicht des Profilelements 100 aus Fig. 1. Wie in Fig. 3 ersichtlich erstrecken sich die Aussparungen entlang der Länge L des Profilelements 100.

Dabei ist gezeigt, wie in der ersten Aussparung 111 ein erstes Befestigungselement 151 und in der dritte Aussparung 113 ein zweites Befestigungselement 153 angeordnet ist. Bei den Befestigungselementen 151 und 153 handelt es sich insbesondere um Schraubelemente.

Darüber hinaus ist an der Stirnseite des Profielements 100 eine Profildichtung 130 angeordnet, die das Profilelement 100 gegenüber dem in der folgenden Fig. 4 gezeigten Flanschelement abdichtet.

Fig. 4 zeigt eine perspektivische Ansicht des Profilelements 100 aus Fig. 3 mit einem Flanschelement 210, welches Teil eines Positionserfassungselements 200 ist. Das Flanschelement 210 weist dazu Befestigungselemente 212 auf, die in die zweite Aussparung 112 und die vierte Aussparung eingreifen und das Flanschelement daran befestigen. Darüber hinaus weist das Positionserfassungselement einen Gehäuseabschnitt 221.

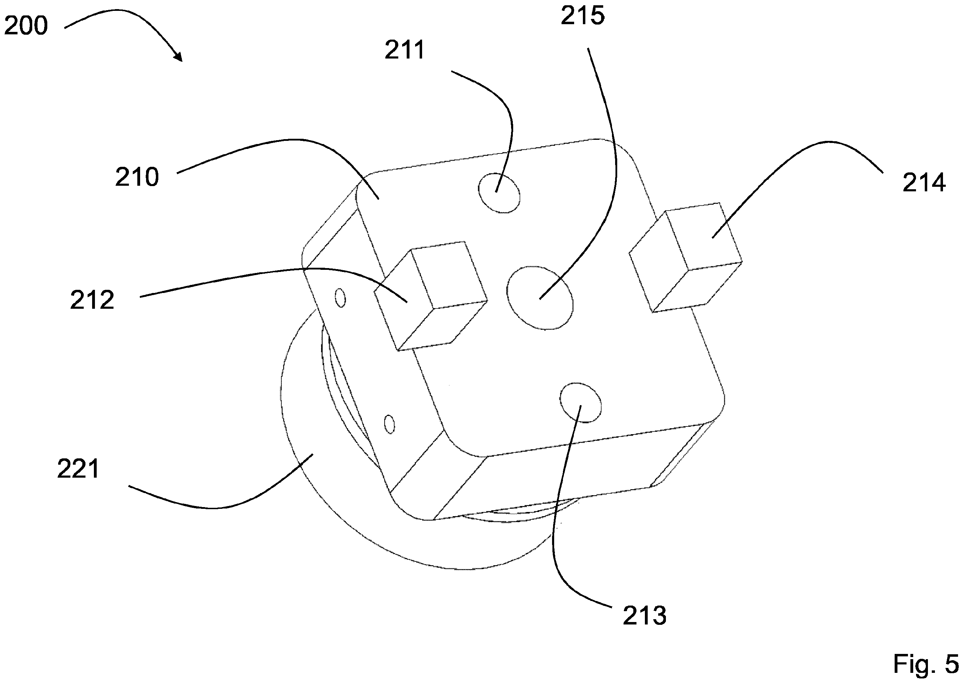

Fig. 5 eine perspektivische Rückansicht des Flanschelements 210 aus Fig. 5. Dabei ist zu sehen, dass das Flanschelement 210 insgesamt vier Befestigungselemente aufweist. Ein erstes Befestigungselement 211, das mit dem ersten Befestigungselement 151 des Profilelements 100 wie in Fig. 3 gezeigt eingreift und ein zweites Befestigungselement 213, das mit dem zweiten Befestigungselement 153 des Profilelements 100 wie in Fig. 3 gezeigt eingreift. Bei den Befestigungselementen 211 und 213 handelt es sich insbesondere um zu den Schraubelementen korrespondierende Schraubaufnahmeelemente.

Darüber hinaus umfasst das Flanschelement 210 auch ein drittes Befestigungselement 212 und ein viertes Befestigungselement 214, die jeweils mit den Aussparungen 112 und 114 des Profilelements 100, wie in Fig. 4 gezeigt eingreifen. Bei den Befestigungselementen 212 und 214 handelt es sich insbesondere um zu den Aussparungen korrespondierende Rastelemente.

Das Flanschelement 210 umfasst auch eine zentrale Aussparung 215, die zum zentralen Hohlraum 115 des Profilelements 100 wie in Fig. 3 gezeigt korrespondiert.

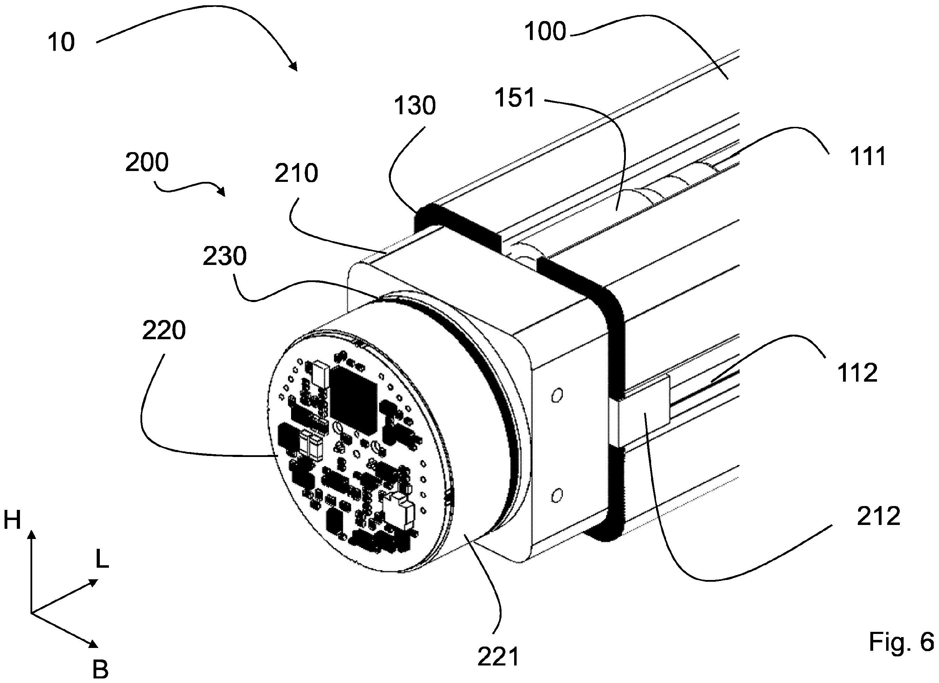

Fig. 6 eine perspektivische Ansicht einer Vorrichtung 10 zur Erfassung einer Position mit 10 einem Profilelement 100 aus Fig. 4 und einem Positionserfassungselement 200. Dabei ist in dem Gehäuseabschnitt 221 eine Auswertungseinheit 220 angeordnet.

Aus perspektivischen Gründen nicht gezeigt ist eine Messsonde des Positionserfassungselements 200, die mit der Auswertungseinheit 220 verbunden ist und sich aus dem Gehäuseabschnitt 221 durch die zentrale Aussparung 215 des Flanschabschnitts 210 wie in Fig. 5 gezeigt und durch die Profildichtung 130 wie in Fig. 3 gezeigt in den zentralen Hohlraum 115 des Profilelements 100 erstreckt und darin angeordnet ist. Die Auswertungseinheit 220 ist dabei ausgebildet, eine Position eines Positionierungselements relativ zu der Messsonde zu erfassen und auszuwerten.

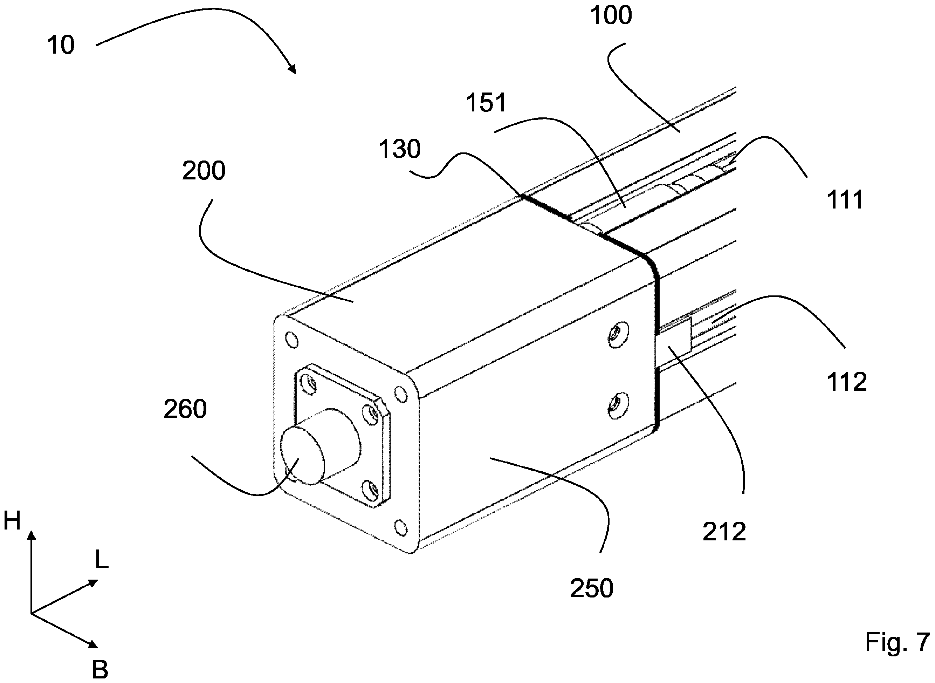

Darüber hinaus ist ein Dichtungselement 230 an dem Gehäuseabschnitt 221 angeordnet um die Auswertungseinheit 220 zusammen mit einem Gehäuseelement wie in der folgenden Fig. 7 gezeigt abzudichten.

Fig. 7 eine perspektivische Ansicht der Vorrichtung 10 zur Erfassung einer Position aus Fig. 6 mit einem Gehäuseelement 250. Das Gehäuseelement 250 umschließt dabei sowohl das Flanschelement 210 als auch den Gehäuseabschnitt 221 und dichtet die darin angeordnete Auswertungseinheit 220 mittels der Profildichtung 130 und dem Dichtungselement 230 gegenüber der Umgebung ab.

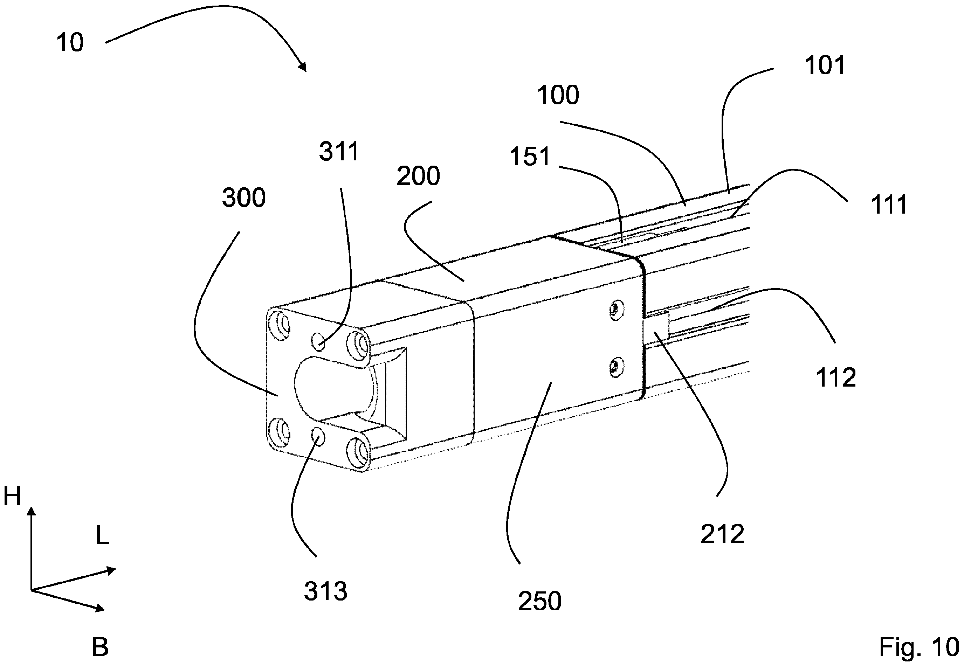

Darüber hinaus umfasst das Gehäuseelement 250 ein Verbindungselement 260, das dazu ausgebildet ist, ein Adapterelement, wie in der folgenden Fig. 10 gezeigt daran zu befestigen.

Fig. 8 eine perspektivische Detailansicht des Profilelements aus Fig. 1 mit einem Positionierungselement 230. Das Positionierungselement ist dabei in der ersten Aussparung 111 des Profilelements 100 angeordnet und wird durch ein Befestigungselement 231 verschiebbar entlang der Länge L innerhalb der Aussparung 111 befestigt. Dazu greift das Befestigungselement 231 mit dem ersten und zweiten Vorsprung der Aussparung 111 ein bzw. ist durch diese innerhalb der Aussparung befestigt.

Das Positionierungselement 230 umfasst auch ein Magnetelement 232, das mit der in dem zentralen Hohlraum 115 angeordneten Messsonde zusammenwirkt, wodurch die Auswertungseinheit wie in Fig. 6 gezeigt die Position des Positionierungselements 230 relativ zu der Messsonde erfassen und auswerten kann.

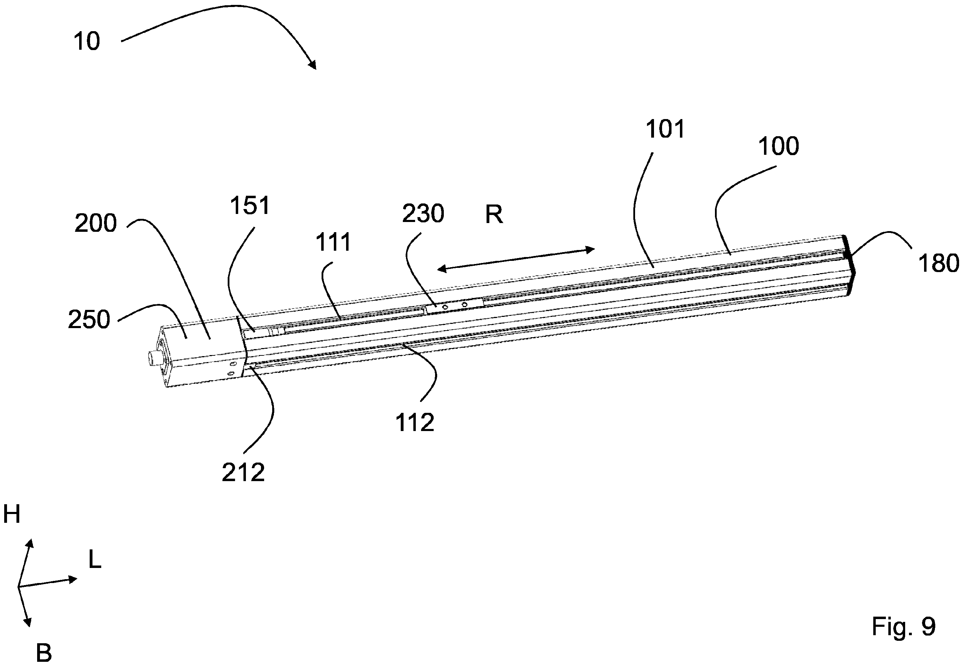

Fig. 9 eine perspektivische Ansicht der Vorrichtung 10 zur Erfassung einer Position aus Fig. 7. Dabei ist das Positionierungselement 230 wie in Fig. 8 gezeigt in der ersten Aussparung 111 angeordnet und kann sich entlang der gesamten Länge L des Profilelements in einer Richtung R bewegen, wodurch eine Position entlang der gesamten Länge L des Profilelements erfasst werden kann.

Das Profilelement 100 weist auch eine Endkappe 180 auf, die das Innere des Profilelements, insbesondere die in dem zentralen Hohlraum angeordnete Messsonde gegen die Umgebung abdichtet.

Fig. 10 eine perspektivische Ansicht der Vorrichtung 10 zur Erfassung einer Position aus Fig. 7 mit einem Adapterelement 300. Das Adapterelement 300 ist mittels des in Fig. 7 gezeigten Verbindungselements 260 an dem Positionserfassungselement 200 befestigt.

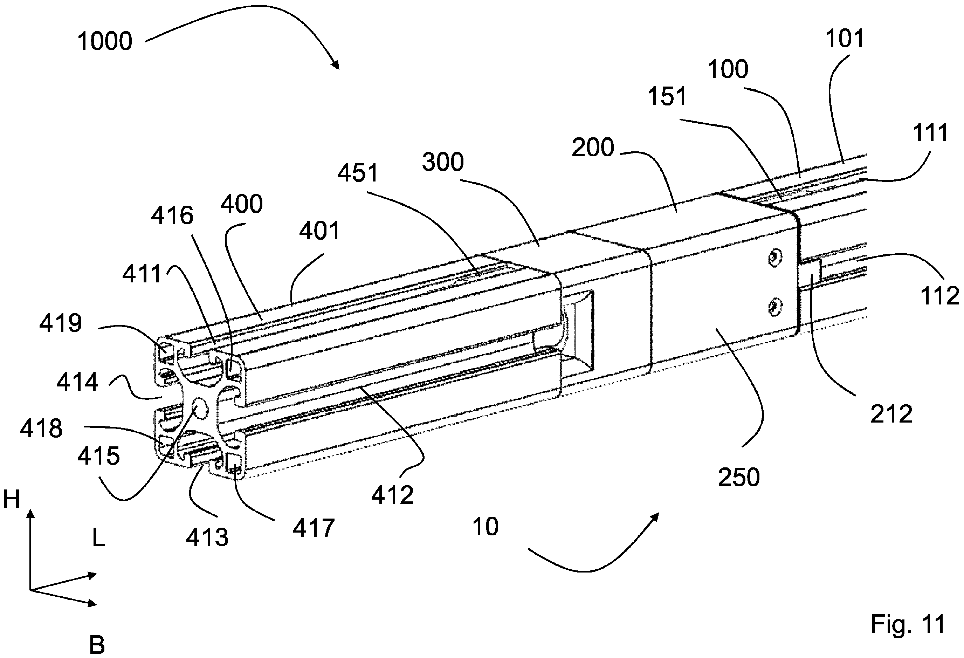

Darüber hinaus weist das Adapterelement 300 Befestigungselement 311 und 313 auf, mittels derer das Adapterelement 300 und somit die gesamte Vorrichtung 10 zur Erfassung einer Position an einem weiteren Profilelement befestigt werden kann, um so ein Positionserfassungssystem zu bilden, wie in der nachfolgenden Fig. 11 gezeigt.

Die Befestigungselemente 311 und 313 sind dabei korrespondierend zu den Befestigungselementen 211 und 213 des Positionserfassungselements 200 wie in Fig. 5 gezeigt ausgebildet.

Das Adapterelement kann auch eine, insbesondere abgedichtete Kabelausführung aufweisen, die aus Gründen der Übersichtlichkeit nicht gezeigt ist, und mit deren Hilfe ein Positionssignal, das von dem Positionserfassungselement erzeugt wird, abgerufen werden kann.

Fig. 11 eine perspektivische Ansicht eines Positionserfassungssystems 1000 mit der Vorrichtung 10 zur Erfassung einer Position aus Fig. 9. Dabei ist die Vorrichtung 10 über das Adapterelement 300 mit einem weiteren Profilelement 400 verbunden und daran befestigt. Das Profilelement ist im Wesentlichen gleich dem Profilelement 100 wie zuvor beschrieben. Dazu weist es einen Profilkörper 401 auf, der ebenso Aussparungen 411-414, einen zentralen Hohlraum 415 sowie weitere Hohlräume 416-419 umfasst. In den Aussparungen 411 und 413 sind zu den Befestigungselementen 151 und 153 wie in Fig. 3 gezeigt korrespondierende Befestigungselemente 451 und 453 angeordnet, die mit den Befestigungselementen 311 und 313 des Adapterelements 300 wie in Fig. 10 gezeigt eingreifen.

Insbesondere können das erster Profilelement 100 und das weitere Profilelement 400 derart in ihrer Länge zugeschnitten sein, dass das Positionserfassungssystem 1000 mit den beiden Profilelementen 100 und 400 sowie dem Positionserfassungselement 200 und dem Adapterelement 300 eine vorgegebene Länge aufweist, insbesondere eine Standardlänge wie beispielsweise 6000 mm des vorliegend zugrunde gelegten Profilelement 8 der Firma item, sodass sich das Positionserfassungssystem 1000 nahtlos in einen Aufbau, insbesondere eine Grundgestell aus mehreren Profilelementen einreiht und sich mit diesen mit Standardmitteln verbinden lässt.

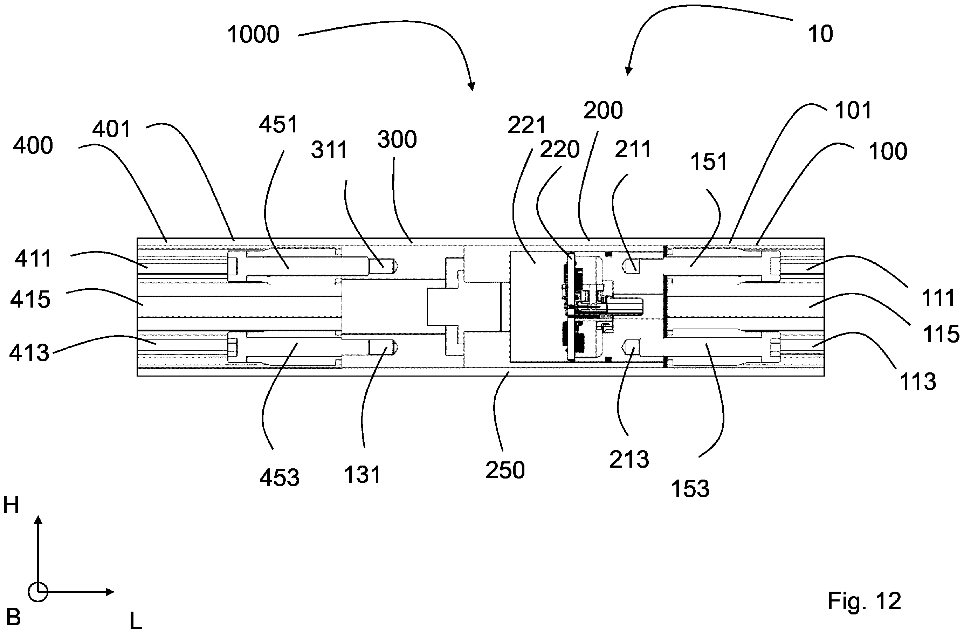

Fig. 12 eine Schnittansicht in Draufsicht des Positionserfassungssystems aus Fig. 11. Dabei ist noch einmal genauer zu erkennen, wie die jeweiligen Befestigungselemente 151 und 211, 153 und 213, 311 und 451 sowie 313 und 453 miteinander eingreifen.

### Bezugszeichenliste

- 10: Vorrichtung zur Erfassung einer Position
- 100: Profilelement
- 100': Profilelement
- 101: Profilkörper
- 101': Profilkörper
- 111: erste Aussparung
- 111-1: erster Vorsprung
- 111-2: zweiter Vorsprung
- 112: zweite Aussparung
- 113: dritte Aussparung
- 114: vierte Aussparung
- 115: zentraler Hohlraum
- 116: erster Hohlraum
- 116`: erster Hohlraum
- 117: zweiter Hohlraum
- 118: dritter Hohlraum
- 119: vierter Hohlraum
- 121: fünfte Aussparung
- 122: sechste Aussparung
- 123: siebte Aussparung
- 125: zentraler Hohlraum
- 126: fünfter Hohlraum
- 127: sechster Hohlraum
- 130: Profildichtung
- 151: erstes Befestigungselement
- 153: zweites Befestigungselement
- 180: Endkappe
- 200: Positionserfassungselement
- 210: Flanschelement
- 211: Befestigungselement
- 212: Befestigungselement
- 213: Befestigungselement
- 214: Befestigungselement
- 215: zentrale Aussparung
- 220: Auswertungseinheit
- 221: Gehäuseabschnitt
- 230: Positionierungselement
- 231: Befestigungselement
- 232: Magnetelement
- 250: Gehäuseelement
- 260: Verbindungselement
- 300: Adapterelement
- 311: Befestigungselement
- 313: Befestigungselement
- 400: Profilelement
- 401: Profilkörper
- 411: erste Aussparung
- 412: zweite Aussparung
- 413: dritte Aussparung
- 414: vierte Aussparung
- 415: zentraler Hohlraum
- 416: erster Hohlraum
- 417: zweiter Hohlraum
- 418: dritter Hohlraum
- 419: vierter Hohlraum
- 1000: System
- B: Breite
- H: Höhe
- L: Länge
- R: Richtung

## Patentansprüche

1. Vorrichtung (10) zur Erfassung einer Position, umfassend:
- ein Profilelement (100), das einen im Wesentlichen rechteckigen Querschnitt und einen länglichen Körper (101) aufweist, wobei das Profilelement zumindest eine erste Aussparung (111), eine zweite Aussparung (121), einen ersten zentralen Hohlraum (115) und einen zweiten zentralen Hohlraum (125) aufweist, die sich entlang der Länge des Körpers (101) erstrecken; und
- ein Positionserfassungselement (200), umfassend eine erste Messsonde, eine zweite Messsonde, ein erstes bewegliches Positionierungselement (230), ein zweites bewegliches Positionierungselement und eine Auswertungseinheit (220), wobei die Auswertungseinheit ausgebildet ist, eine Position des ersten Positionierungselements relativ zu der ersten Messsonde zu erfassen und eine Position des zweiten Positionierungselements relativ zu der zweiten Messsonde zu erfassen und wobei die erste Messsonde in dem ersten zentralen Hohlraum (115) des Profilelements (100) angeordnet ist und die zweiten Messsonde in dem zweiten zentralen Hohlraum (115) des Profilelements (100) angeordnet ist.

2. Vorrichtung nach Anspruch 1,
wobei das erste bewegliche Positionierungselement (230) in der zumindest einen ersten Aussparung (111) angeordnet ist und entlang dieser beweglich ist.

3. Vorrichtung nach einem der vorhergehenden Ansprüche,
wobei das zweite bewegliche Positionierungselement (230) in der zumindest einen zweiten Aussparung (121) angeordnet ist und entlang dieser beweglich ist.

4. Vorrichtung nach einem der Ansprüche 2 oder 3,
wobei die zumindest eine erste Aussparung (111) einen ersten Vorsprung aufweist und das erste bewegliche Positionierungselement (230) ein Befestigungselement (231) aufweist, das mit dem ersten Vorsprung derart eingreift, dass es entlang der Länge des Körpers beweglich innerhalb der Aussparung befestigt ist.

5. Vorrichtung nach einem der vorstehenden Ansprüche,
wobei die zumindest eine erste Aussparung (111) einen abschnittsweise viertelkreisförmigen Querschnitt, insbesondere einen pilzförmigen Querschnitt aufweist.

6. Vorrichtung nach einem der vorstehenden Ansprüche,
wobei das erste bewegliche Positionierungselement (230) ein Magnetelement (232) umfasst.

7. Vorrichtung nach Anspruch 6, wobei das Positionserfassungselement (200) eine Position des Positionierungselements (230) basierend auf dem magnetostriktiven Prinzip erfasst.

8. Vorrichtung nach einem der vorstehenden Ansprüche,
wobei das Profilelement vier Aussparungen (111, 112, 113, 114) aufweist, die symmetrisch um den zentralen Hohlraum (115) herum angeordnet sind.

9. Vorrichtung nach Anspruch 8,
wobei die vier Aussparungen (111, 112, 113, 114) in vier Seiten des rechteckigen Querschnitts angeordnet sind.

10. Positionserfassungssystem (1000), umfassend:
- eine Vorrichtung (10) zur Erfassung einer Position gemäß einem der Ansprüche 1 bis 9;
- ein weiteres Profilelement (400); und
- ein Adapterelement (300), das die Vorrichtung (10) und das weitere Profilelement (400) miteinander verbindet.

## Claims

1. An apparatus (10) for detecting a position, comprising:
- a profile element (100) which has a substantially rectangular cross-section and an elongate body (101), wherein the profile element has at least a first recess (111), a second recess (121), a first central cavity (115) and a second central cavity (125) which extend along the length of the body (101); and
- a position detection element (200), comprising a first measurement probe, a second measurement probe, a first movable positioning element (230), a second movable positioning element and an evaluation unit (220), wherein the evaluation unit is configured to detect a position of the first positioning element relative to the first measurement probe and to detect a position of the second positioning element relative to the second measurement probe, and wherein the first measurement probe is arranged in the first central cavity (115) of the profile element (100) and the second measurement probe is arranged in the second central cavity (115) of the profile element (100).

2. An apparatus according to claim 1,
wherein the first movable positioning element (230) is arranged in the at least one first recess (111) and is movable along it.

3. An apparatus according to one of the preceding claims,
wherein the second movable positioning element (230) is arranged in the at least one second recess (121) and is movable along it.

4. An apparatus according to one of the claims 2 or 3,
wherein the at least one first recess (111) has a first projection and the first movable positioning element (230) has a fastening element (231) which engages with the first projection such that said fastening element (231) is movably fastened within the recess along the length of the body.

5. An apparatus according to any one of the preceding claims,
wherein the at least one first recess (111) has a sectionally quadrant-shaped cross-section, in particular a mushroom-shaped cross-section.

6. An apparatus according to any one of the preceding claims,
wherein the first movable positioning element (230) comprises a magnetic element (232).

7. An apparatus according to claim 6, wherein the position detection element (200) detects a position of the positioning element (230) based on the magnetostrictive principle.

8. An apparatus according to any one of the preceding claims,
wherein the profile element has four recesses (111, 112, 113, 114) which are arranged symmetrically around the central cavity (115).

9. An apparatus according to claim 8,
wherein the four recesses (111, 112, 113, 114) are arranged in four sides of the rectangular cross-section.

10. A position detection system (1000) comprising:
- an apparatus (10) for detecting a position according to any one of the claims 1 to 9;
- a further profile element (400); and
- an adapter element (300) which connects the apparatus (10) and the further profile element (400) to one another.

## Revendications

1. Dispositif (10) de détection d'une position, comprenant :
- un élément profilé (100) qui présente une section transversale sensiblement rectangulaire et un corps allongé (101), l'élément profilé présentant au moins un premier évidement (111), un deuxième évidement (121), une première cavité centrale (115) et une deuxième cavité centrale (125), qui s'étendent sur la longueur du corps (101) ; et
- un élément de détection de position (200), comprenant une première sonde de mesure, une deuxième sonde de mesure, un premier élément de positionnement mobile (230), un deuxième élément de positionnement mobile et une unité d'évaluation (220), l'unité d'évaluation étant conçue pour détecter une position du premier élément de positionnement par rapport à la première sonde de mesure et une position du deuxième élément de positionnement par rapport à la deuxième sonde de mesure, et la première sonde de mesure étant disposée dans la première cavité centrale (115) de l'élément profilé (100) et la deuxième sonde de mesure étant disposée dans la deuxième cavité centrale (115) de l'élément profilé (100).

2. Dispositif selon la revendication 1,
dans lequel le premier élément de positionnement mobile (230) est disposé dans ledit au moins un premier évidement (111) et est mobile le long de celui-ci.

3. Dispositif selon l'une des revendications précédentes,
dans lequel le deuxième élément de positionnement mobile (230) est disposé dans ledit au moins un deuxième évidement (121) et est mobile le long de celui-ci.

4. Dispositif selon l'une des revendications 2 ou 3,
dans lequel ledit au moins un premier évidement (111) comprend une première saillie et le premier élément de positionnement mobile (230) comprend un élément de fixation (231) qui s'engage avec la première saillie de manière à être fixé à l'intérieur de l'évidement de manière mobile sur la longueur du corps.

5. Dispositif selon l'une des revendications précédentes,
dans lequel ledit au moins un premier évidement (111) présente une section transversale localement en forme de quart de cercle, en particulier une section transversale en forme de champignon.

6. Dispositif selon l'une des revendications précédentes,
dans lequel le premier élément de positionnement mobile (230) comprend un élément magnétique (232).

7. Dispositif selon la revendication 6,
dans lequel l'élément de détection de position (200) détecte une position de l'élément de positionnement (230) à l'aide du principe magnétostrictif.

8. Dispositif selon l'une des revendications précédentes,
dans lequel l'élément profilé présente quatre évidements (111, 112, 113, 114) disposés symétriquement autour de la cavité centrale (115).

9. Dispositif selon la revendication 8,
dans lequel les quatre évidements (111, 112, 113, 114) sont disposés dans quatre côtés de la section transversale rectangulaire.

10. Système de détection de position (1000) comprenant :
- un dispositif (10) de détection d'une position selon l'une des revendications 1 à 9 ;
- un autre élément profilé (400) ; et
- un élément adaptateur (300) qui relie le dispositif (10) et l'autre élément profilé (400) l'un à l'autre.
